# EUROPEAN PATENT SPECIFICATION

(11) **EP 0 248 496 B1**
(45) Date of publication and mention of the grant of the patent: **26.01.1994**
(21) Application number: 87201038.4
(22) Date of filing: 02.06.1987
(51) Int. Cl.: H04N 9/64

(54) **Vertical video signal filter**
Vertikalfilter für Videosignale
Filtre vertical de signaux vidéo

(30) Priority: 05.06.1986 US 871188
(43) Date of publication of application: 09.12.1987
(73) Proprietor: Philips Electronics N.V., 5621 BA Eindhoven (NL)
(72) Inventor: Prodan, Richard S., NL-5656 AA Eindhoven (NL)
(74) Representative: Kooiman, Josephus Johannes Antonius

(56) References cited:
- GB-A- 1 326 386
- GB-A- 2 138 245
- US-A- 4 282 546

## Description

The invention relates to a vertical video signal filter arrangement comprising a first and a second recursive filter circuit each comprising an adder, a change-over switch and a line memory.

In television receivers having a picture-in-picture (PIP) feature, that is, receivers in which a small, compressed version of the video signal is displayed within a larger "main" picture, two channels are provided, namely, a main channel and a PIP channel. The main channel is a conventional television channel and receives an incoming television signal and furnishes a luminance signal and two color difference signals therefor. The PIP channel also receives a television signal and processes the signal digitally. A digital, reduced version of the received picture is stored in a memory. This digital reduced version is read out from the memory, and the resulting color difference and luminance signals are combined with the corresponding signals from the main channel under control of a synchronous switching circuit. The combined signals are then converted to red, green and blue color signals for application to a display. A vertical video signal filter arrangement is provided to process the digital television signal before it is stored in the memory. Since the PIP picture is to be displayed in a much smaller area than the main picture, sampling is required. However, sampling at less than the Nyquist frequency introduces low frequency beats. Also, the compressed signal, if not preprocessed, may be subject to line flicker and aliasing.

GB-A-1,326,386 discloses a vertical video signal filter arrangement which carries out a low-pass filtering function. However, the number of components used in this known vertical video signal filter arrangement is very large.

It is, *inter alia*, an object of the invention to provide a vertical video signal filter arrangement which carries out the low-pass filtering reliably and with a minimum of components. To this end, the invention provides a vertical video signal filter arrangement as defined in the main claim. Advantageous embodiments are defined in the subclaims.

With the above and additional objects and advantages in mind as will hereinafter appear, the invention will be described with reference to the accompanying drawing, in which:
Figure 1 is a schematic block diagram of a portion of a PIP television receiver;
Figure 2 is a schematic block diagram of a vertical video signal filter comprising only one signal path for use in the PIP television receiver;
Figures 3A-3D are signal and time diagrams for the vertical video signal filter of Figure 2;
Figure 4 is a schematic block diagram of another vertical video signal filter comprising only one signal path for use in the PIP television receiver;
Figures 5A-5D are signal and time diagrams for the vertical video signal filter of Figure 4;
Figure 6 is a schematic block diagram of a vertical video signal filter comprising two non-coinciding signal paths;
Figures 7A-7E are signal and timing diagrams for the vertical video signal filter of Figure 6;
Figure 8 is a schematic block diagram of an embodiment of a vertical video signal filter of the subject invention;
Figures 9A-9E are timing diagrams illustrating the operation of the vertical video signal filter of Figure 8;
Figure 10 is a schematic block diagram of another embodiment of a vertical video signal filter of the subject invention; and
Figures 11A-11E are timing diagrams illustrating the operation of the vertical video signal filter of Figure 10.

### DESCRIPTION OF THE PREFERRED EMBODIMENTS

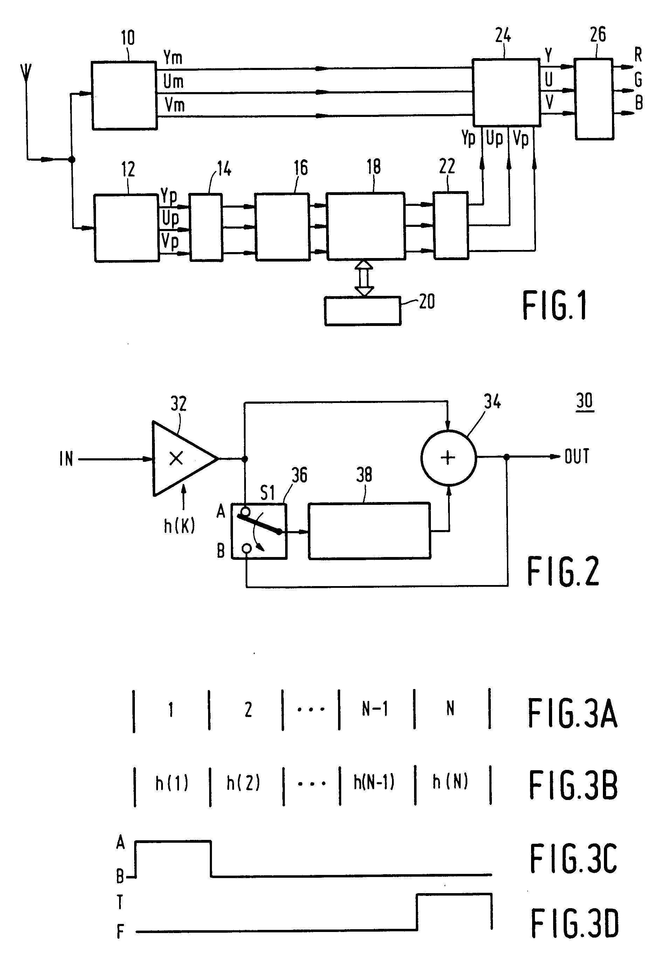

A portion of a picture-in-picture (PIP) television receiver is shown in Figure 1. The PIP television receiver is capable of displaying a main picture, substantially filling the area of the display, and, simultaneously, a PIP picture which is substantially smaller than the main picture and replaces a corresponding portion of the main picture. This PIP picture may be derived from a channel different from that of the main picture or from another input device, for example, a video tape recorder.

The PIP television receiver includes a main signal path having an input section 10 for receiving a main television signal and for supplying luminance (Ym) and chrominance (Um, Vm) signals constituting the main picture. The PIP television receiver further includes a PIP signal path also having an input section 12 for receiving a PIP television signal and for supplying luminance (Yp) and chrominance (Up, Vp) signal constituting the PIP picture. The signals Yp, Up, Vp are then applied to three channels of a analog-to-digital converter circuit 14 for separately digitizing these signals. Outputs from the analog-to-digital converter circuit 14 are applied to three channels of a vertical video signal filter 16 for separately low-pass filtering.

Outputs from the vertical video signal filter 16 are applied to a PIP processor 18 which applies every third scanning line therein to a PIP memory 20. The PIP memory 20 is then selectively read out in synchronism with the main channel and applies its output to a digital-to-analog converter circuit 22. These low-pass filtered, decimated signal Yp, Up, Vp are applied to a first set of inputs of a change-over switch 24, to a second set of inputs thereof the signals Y, U, V of the main signal path are applied. Outputs of the change-over switch 24 are applied to a matrix circuit 26 forming the color signals R, G, B for application to a display device (not shown).

Figure 2 shows one channel 30 of a one signal path vertical video signal filter which includes a multiplier circuit 32 which has a factor setting input adapted to receive a factor setting signal for successively setting a plurality of multiplication factors h(K), by which video signals from successive line periods of one of the video signals Yp, Up and Vp are multiplied. An output from multiplier circuit 32 is applied to a first input of an adder 34 and to a first input of a change-over switch 36, to a second input of which, an output of the adder 34 is applied. The output of the change-over switch 36 is applied, via a line memory 38 to a second input of the adder 34, the output of the adder 34 forming the ouput of the one signal path vertical video signal filter.

Figure 3A shows the input lines to the one signal path vertical video signal filter of Figure 2.

Figure 3B shows the corresponding coefficients h(K).

Figure 3C shows the timing for change over switch 36, while Figure 3D shows whether valid output is available ( T rue or F alse) and therefore the timing of the line to be selected by the PIP processor. As should be apparent, the length of the one signal path vertical video signal filter is equal to the decimation factor.

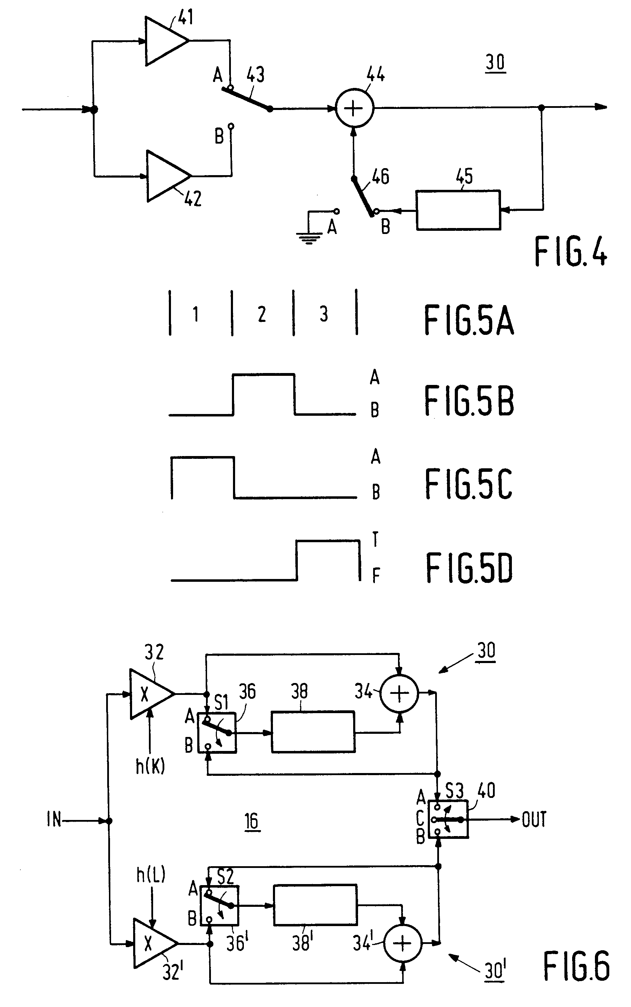

Figure 4 shows one channel of another vertical video signal filter comprising one signal path, which includes a multiplier circuit including a first multiplier 41, a second multiplier 42 and a first change-over switch 43. A video signal input is applied simultaneously to the first multiplier 41 and the second multiplier 42. The first change-over switch 43 alternately selects the output of the first multiplier 41 or that of the second multiplier 42 for application to a first input of an adder 44, to a second input of which, an output of a second change-over switch 46 is applied. An output of the adder 44 is appied to an input of a line memory 45. An output of the line memory 45 is applied to a first input of the second change-over switch 46, to a second input of which "0" is applied.

Figure 5A shows the input lines to the signal path of the vertical video signal filter of Figure 4. Figure 5B shows the timing for the first change-over switch 43, and Figure 5C shows the timing for the second change-over switch 46. Figure 5D shows whether valid output is available ( T rue or F alse) and therefore the timing of the line to be selected by the PIP-processor.

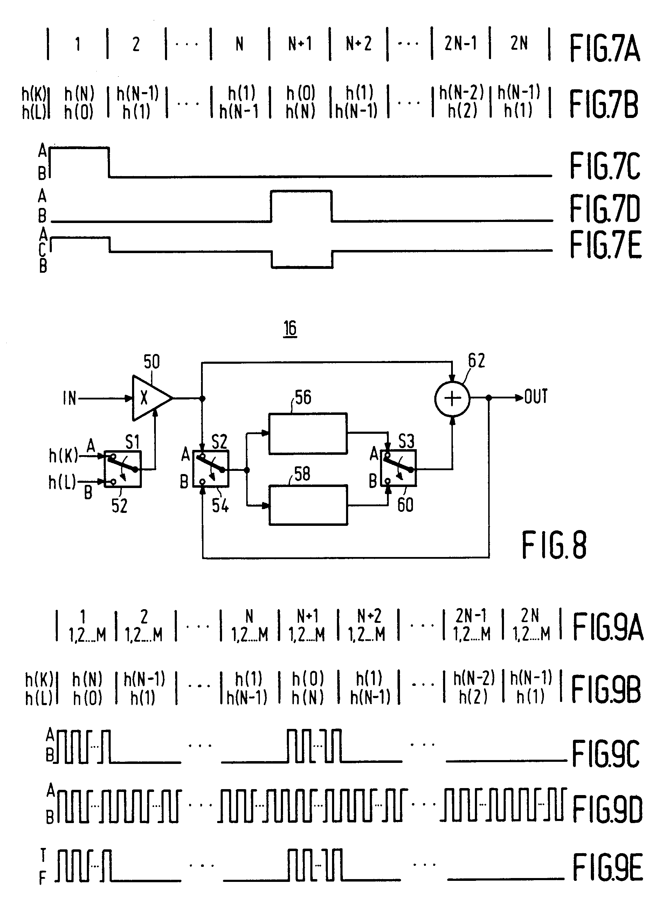

Figure 6 shows one channel of a vertical video signal filter 16 comprising two non-coinciding signal paths. This channel of the vertical video signal filter 16 includes the one signal path vertical video signal filter channel 30 as described above with reference to Figure 2 of the drawing and a second one signal path vertical video signal filter channel 30' substantially identical thereto and including a multiplier circuit 32' and corresponding coefficients h(L), adder 34', switch 36', and line memory 38'. The one signal path vertical video signal filter channel 30 will be referred to from now on as the first signal path 30, and the one signal path vertical video signal filter channel 30' as the second signal path 30' of the vertical video signal filter 16. This vertical video signal filter 16 also includes a multiplexer 40 shown as a change-over switch having a first input connected to the output of the signal path 30, a second input unconnected, and a third input connected to the output of the second signal path 30', the output of multiplexer 40 forming the output of this vertical video signal filter 16.

Figure 7A shows the input lines to the vertical video signal filter 16, in which N represents the length of the vertical video signal filter. Figure 7B shows the corresponding coefficients h(K) and h(L). Figures 7C and 7D show the timing of switches 36 and 36'; note that with respect to the input line numbers, the switch 36 is operated at line number 1 while switch 36' is operated at line number N+1. Finally Figure 7E shows the timing and positions of the multiplexer 40. It should be apparent that the length of each signal path 30 and 30' of the vertical video signal filter 16 is 2N while the decimation factor is N.

In operation, the two signal paths 30 and 30' are multiplexed with a constant phase difference, i.e. a filtered video signal obtained via the second signal path being supplied from the output of the video signal filter each time over a constant number of line periods after the filtered video signal obtained via the first signal path. The sampled scan lines x(n) provide a common input to each of the signal paths. In the first signal path 30, the sample scan line x(1) is multiplied by h(N) in the multiplier circuit 32. The product is routed through change-over switch 36, which is initially in position A, to the input of the line memory 38. As shown in Fig. 7C, change-over switch 36 is changed to position B for subsequent scan lines. After 2N lines, the line memory 38 contains the weighted sum: h(N)x(1) + h(N-1)x(2) + ...+h(0)x(N+1) + h(1)x(N+2) +...+h(N-1)x(2N). The process repeats with line 2N+1 initializing the data in the line memory 38 while simultaneously adding the same term h(n)x(2N+1) to the convolutional sum at the output of the adder 34. Thus the filtered output is produced periodically during initialization of the first signal path 30 every 2N scan lines. The second signal path 30' operates identically to the first signal path 30 except that the initialization and concurrent output are delayed by precisely N input lines. Multiplexer 40 multiplexes the outputs of the two signal paths alternating betweeen them every N lines for one output line time. This vertical video signal filter 16 filters the input scan lines with a linear phase filter of length 2N+1 while decimating the output by a factor N. Thus the filter length limit of N lines in the one signal path vertical video signal filter of the Figures 2 and 4 has been increased to 2N+1 lines for the same decimation rate N in the vertical video signal filter 16.

It will be obvious, that it is also possible to obtain a vertical video signal filter comprising two non-coinciding signal paths by using two one signal path vertical video signal filters as shown in Figure 4, instead of two one signal path vertical video signal filters as shown in Figure 2. It is also possible to interchange the multiplication circuit of Figure 2 with that of Figure 4.

Figure 8 shows an embodiment of the vertical video signal filter 16 of the subject invention. A multiplier circuit 50 receives the input video signals from successive line periods. A change-over switch 52 output is applied to a factor setting input of the multiplier circuit 50 while a signal for successively setting a first plurality of muliplication factors h(K) and a signal for successively setting a second plurality of multiplication factors h(L) are respectively applied to two inputs A and B of the change-over switch 52. An output of the multiplier circuit 50 is applied to a first input A of a change-over switch 54, an output of which is applied to a first line memory 56 and a second line memory 58. Outputs of line memories 56 and 58 are applied to inputs A and B, respectively, of a change-over switch 60, an output of which being applied to a second input of an adder 62 which receives at a first input the output of the multiplier circuit 50. An output of the adder 62 is applied to a second input B of the change-over switch 54.

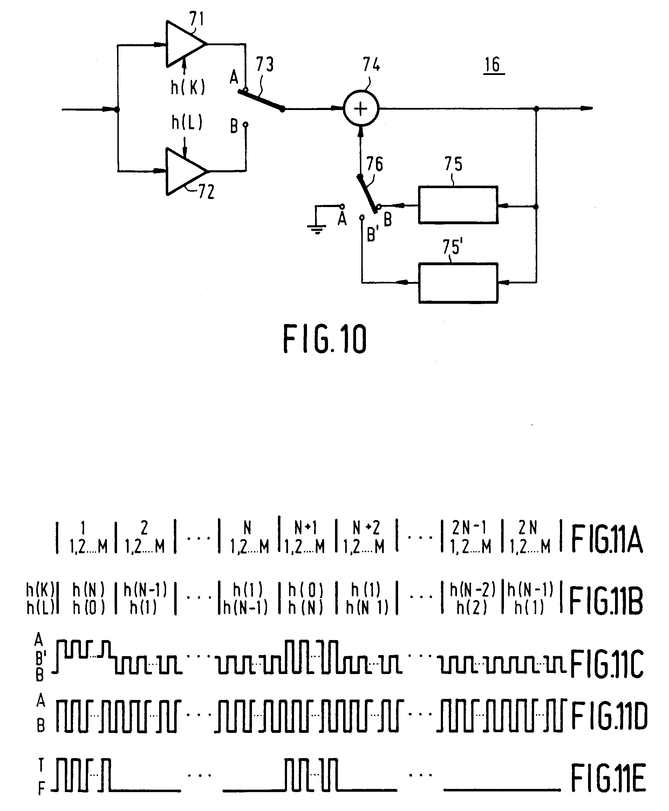

As shown in Figure 9A, each input video signal from a line period consists of M input samples. Each individual input sample is then divided into two equal periods. These half-sample periods define a stable state of the three switches 52, 54 and 60. Each switch is either in position A or B for an entire half-sample period, but may switch position at the beginning or in the middle of any sample within the input video signal from the line period. This allows two distinct operations to be performed on each sample during a single sample period.

Change-over switches 52 and 60, as shown in Figure 9D, continually toggle between position A during each first half-sample period to position B during each second half-sample period.The output of switch 52 supplies the multiplication factors h(K) and h(L), which are shown in Figure 9B, to the multiplier circuit 50 during the first and second half of each sample period, respectively. This produces two muliplications for each sample in the input line, one product for the first line memory 56 and the other for the second line memory 58. Change-over switch 60 similarly supplies the outputof the first line memory 56 during the first half-sample period and the output of the second line memory 58 during the second half-sample period to a second imput of the adder 62. A first input of the adder 62 is provided by the output of the multiplier circuit 50. During the first half-sample period, the output of the adder 62 is the present sample of the input line multiplied by h(K) plus the output sample of the first line memory 56. During the second half-sample period, the output of the adder 62 is the same sample of the input line multiplied by h(L) plus the output sample of the second line memory 58. Change-over switch 54, as shown in Figure 9C, supplies either the adder output or the amplifier 50 output to the input of the line delay circuits 56 and 58 on alternate half-sample periods. Change-over switch 54 is in position A during the first half-sample periods of input line 1 and the second half-sample periods of input lne N+1 corresponding to the initialization and concurrent valid output of the signal paths 30 and 30', respectively. The above described operation repeats periodically every 2N scan lines. During the valid output periods, as shown in Figure 9E with a T, the filtered and decimated output scan line samples produced are identical to those produced in the vertical video signal filter of Figure 6.

Figure 10 shows an alternate embodiment of the vertical video signal filter 16 of the subject invention, which includes a multiplier circuit including a first multiplier 71, a second multiplier 72 and a first change-over switch 73. A video signal input is applied simultaneously to the first multiplier 71 and the second multiplier 72. A signal for successively setting a first plurality of multiplication factors h(K) is applied to a factor-setting input of the multiplicater 71. A signal for successively setting a second plurality of multiplication factors h(L) is applied to a factor-setting input of the multiplier 72. The first change-over switch 73 alternately selects the output of the first multiplier 71 or that of the second multiplier 72 for application to a first input of an adder 74, to a second input of which, an output of a second change-over switch 76 is applied. An output of the adder 74 is applied to an input of a first line memory 75 and that of a second line memory 75'. An output of the line memory 75 is applied to a first input B of the second change-over switch 76, to a second input B' of which an output of the line memory 75' is applied, and to a third input A of said second change-over switch 76 "0" is applied.

Figure 11A shows the input lines as in Figure 9A. Figure 11B shows the multiplication factors h(K) and h(L) as in Figure 9B. As shown in Figure 11C, the second change-over switch 76 toggles during line 1 between position A during each first half-sample period to position B' during each second half sample period.

During lines 2 through N and N+2 through 2N, the second change-over switch 76 toggles between position B during each first half-sample period to position B' during each second half-sample period. During line N+1 said second change-over switch 76 toggles between position B during each first, to position A during each second half-sample period. The first change-over switch 73, as shown in Figure 11D, continually toggles between position A during each first, to position B during each second half-sample period. Figure 11E shows whether (T) or not (F) valid output is available.

The above-described embodiments of the invention are advantageous in combination with television standards having a number of lines per frame which is divisible by 3, e.g. 525 or 1125. Further embodiments of the invention, which will be described below, are advantageous in combinations with television standards having a number of lines which is not divisible by 3, e.g. 625 or 1250. These embodiments are similar to those described above, but have also an even-odd field transition detector for dectecting the transition of an even or an odd field into an odd or an even field, respectively. The even field is defined here to be the field which has coinciding vertical and horizontal synchronisation pulses, and the odd field is defined to be the field which has the verticle synchronisation pulse between two horizontal synchronisation pulses.

After a transition from the odd to the even field of the second picture an output signal of the even-odd field transition detector causes a reset of the vertical video signal filter, and after that the subject embodiments operate identical to the above-described embodiments.

After a transition from the even to the odd field the output signal of the even-odd field transition detector causes a reset of the vertical video signal filter after the first full line of the odd field, and the subject embodiments operate form the second full line of the odd field identical to the above-described embodiments. Resetting can e.g. be performed by setting change-over switches 36, 36', 46, 54 and 75 in the A position.

The procedure is necessary, because without these measures mutual positions of the even and odd field would change continuously, as those skilled in the art will appreciate.

## Claims

1. A vertical video signal filter arrangement for filtering an input video signal, and comprising a first and a second recursive filter circuit for furnishing first and second filtered video signals which are combinations of each time a plurality of video signals from successive line periods of said input video signal, said vertical video signal filter arrangement supplying a line of said second filtered video signal each time a constant number of line periods after having supplied a line of said first filtered video signal, said first recursive filter circuit comprising a first adder (62; 74) having a first input coupled to a input of the vertical video signal filter arrangement, a first change-over switch (S2; 76) and a first line memory (56; 75) having a input coupled to an output of said first adder (62; 74) and an output coupled to a second input of said first adder (62; 74), said second recursive filter circuit comprising a second adder (62; 74) having a first input coupled to said input of the vertical video signal filter arrangement, a second change-over switch (S2; 76) and a second line memory (58; 75') having an input coupled to a output of said second adder (62; 74) and an output coupled to a second input of said second adder (62; 74),
characterized in that said first and second adders are constituted by one adder (62; 74) while said first (56; 75) and second (58; 75') line memories are two different line memories. (Figs. 8; 10)

2. A vertical video signal filter arrangement as claimed in claim 1, characterized in that a first input of said change-over switch (S2) is coupled to said input of said vertical video signal filter arrangement, a second input of said change-over switch (S2) is coupled to said output of said adder (62), and an output of said change-over switch (S2) is coupled to said inputs of said line memories (56, 58). (Fig. 8)

3. A vertical video signal filter arrangement as claimed in claim 2, characterized in that a first input of a further change-over switch (60) is coupled to said output of said first line memory (56), a second input of said further change-over switch (60) is coupled to said output of said second line memory (58), and an output of said further change-over switch (60) is coupled to said second input of said adder (62).

4. A vertical video signal filter arrangement as claimed in claim 1, characterized in that said first and second change-over switches are constituted by one change-over switch (76), a first input (B) of said change-over switch (76) is coupled to said output of said first line memory (56), a second input (B') of said change-over switch (76) is coupled to said output of said second line memory (58), and an output of said change-over switch (76) is coupled to said second input of said adder (74). (Fig. 10)

5. A vertical video signal filter arrangement as claimed in claim 1, characterized in that said first input of said adder (62) is coupled to said input of the vertical video signal filter arrangement through a multiplier circuit (50) having a factor setting input, said combinations being weighted averages, said factor setting input being coupled to an output of a further change-over switch (S1) having a first input for receiving a first plurality of weighting factors (h(K)) and a second input for receiving a second plurality of weighting factors (h(L)). (Fig. 8)

6. A vertical video signal filter arrangement as claimed in claim 1, characterized in that said combinations are weighted averages, and said first input of said adder (62) is coupled to said input of the vertical video signal filter arrangement through a multiplier arrangement (71, 72, 73) comprising first (71) and second (72) multiplier circuits and a further change-over switch (73), each multiplier circuit (71, 72) having an input coupled to said input of the vertical video signal filter arrangement and a factor setting input for receiving a first (h(K)) or a second (h(L)) plurality of weighting factors, said further change-over switch (73) having a first input coupled to an output of said first multiplier circuit (71), a second input coupled to an output of said second multiplier circuit (72), and a output coupled to said first input of said adder (74). (Fig. 10)

7. A vertical video signal filter arrangement as claimed in claim 1, characterized by further comprising an even-odd field transition detector for detecting the transition of an even or an odd field into an odd or a even field, respectively, whereby upon commencement of each field the arrangement is brought to a correct initial state corresponding to the subject field.

## Patentansprüche

1. Vertikal-Videosignalfilteranordnung zum Filtern eines Eingangs-Videosignals und mit einem ersten und einem zweiten rekursiven Filterkreis zum Liefern eines ersten und eines zweiten gefilterten Videosignals, die eine Kombination von jeweils einer Anzahl Videosignale aus aufeinanderfolgenden Zeilenperioden des genannten Eingangs-Videosignals sind, wobei die genannte Vertikal-Videosignalfilteranordnung jeweils eine konstante Anzahl Zeilenperioden nach der Lieferung einer Zeile des genannten ersten gefilterten Videosignals eine Zeile des genannten zweiten gefilterten Videosignals liefert, wobei der genannte erste Rekursiv-Filterkreis einen ersten Addierer (62; 74) aufweist, von dem ein erster Eingang mit einem Eingang der Vertikal-Videosignalfllteranordnung gekoppelt ist, einen ersten Umschalter (S2; 76), und einen ersten Zeilenspeicher (56; 75), von dem ein Eingang mit einem Ausgang des genannten ersten Addierers (62; 74) gekoppelt ist, und von dem ein Ausgang mit einem zweiten Eingang des genannten ersten Addierers (62; 74) gekoppelt ist, wobei der genannte zweite Rekursiv-Filterkreis einen zweiten Addierer (62; 74) aufweist, von dem ein erster Eingang mit dem genannten Eingang der Vertikal-Videosignalfilteranordnung gekoppelt ist, einen zweiten Umschalter (S2; 76) und einen zweiten Zeilenspeicher (58; 75'), von dem ein Eingang mit einem Ausgang des genannten zweiten Addierers (62; 74) gekoppelt ist und von dem ein Ausgang mit einem zweiten Eingang des genannten zweiten Addierers (62; 74) gekoppelt ist, dadurch gekennzeichnet, daß der genannte erste und zweite Addierer durch nur einen Addierer (62; 74) gebildet sind, während der genannte erste (56; 75) und zweite (58; 75') Zeilenspeicher zwei verschiedene Zeilenspeicher sind. (Fig. 8; 10)

2. Vertikal-Videosignalfilteranordnung nach Anspruch 1, dadurch gekennzeichnet, daß ein erster Eingang des genannten Umschalters (S2) mit dem genannten Eingang der genannten Vertikal-Videosignalfilteranordnung gekoppelt ist, wobei ein zweiter Eingang des genannten Umschalters (S2) mit dem genannten Ausgang des genannten Addierers (62) gekoppelt ist, und wobei ein Ausgang des genannten Umschalters (S2) mit den genannten Eingängen der genannten Zeilenspeicher (56; 58) gekoppelt ist. (Fig. 8)

3. Vertikal-Videosignalfilteranordnung nach Anspruch 2, dadurch gekennzeichnet, daß ein erster Eingang eines weiteren Umschalters (60) mit dem genannten Ausgang des genannten ersten Zeilenspeichers (56) gekoppelt ist, wobei ein zweiter Eingang des genannten weiteren Umschalters (60) mit dem genannten Ausgang des genannten zweiten Zeilenspeichers (58) gekoppelt ist, und wobei ein Ausgang des genannten weiteren Umschalters (60) mit dem genannten zweiten Eingang des genannten Addierers (62) gekoppelt ist.

4. Vertikal-Videosignalfilteraordnung nach Anspruch 1, dadurch gekennzeichnet, daß der genannte erste und zweite Umschalter aus nur einem Umschalter (76) bestehen, wobei ein erster Eingang (B) des genannten Umschalters (76) mit dem genannten Ausgang des genannten ersten Zeilenspeichers (56) gekoppelt ist, wobei ein zweiter Eingang (B')des genannten Umschalters (76) mit dem genannten Ausgang des genannten zweiten Zeilenspeichers (58) gekoppelt ist und wobei ein Ausgang des genannten Umschalters (76) mit dem genannten zweiten Eingang des genannten Addierers (74) gekoppelt ist. (Fig. 10)

5. Vertikal-Videosignalfllteraordnung nach Anspruch 1, dadurch gekennzeichnet, daß der genannte erste Eingang des genannten Addierers (62), über einen Multiplizierkreis (50) mit einem Faktorsetzeingang, mit dem genannten Eingang der Vertikal-Videosignalfilteranordnung gekoppelt ist, wobei die genannten Kombinationen gewichtete Mittelwerte sind, wobei der genannte Faktorsetzeingang mit einem Ausgang eines weiteren Umschalters (S1) gekoppelt ist, der einen ersten Eingang hat zum Empfangen einer ersten Anzahl Gewichtungsfaktoren (h(K)) und einen zweiten Eingang zum Empfangen eines zweiten Anzahl Gewichtungsfaktoren (h(L)). (Fig. 8)

6. Vertikal-Videosignalfilteranordnung nach Anspruch 1, dadurch gekennzeichnet, daß die genannten Kombinationen gewichtete Mittelwerte sind und der genannte erste Eingang des genannten Addierers (62) über eine Multiplizieranordnung (71, 72, 73), die einen ersten (71) und zweiten (72) Miltiplizierkreis sowie einen weiteren Umschalter (73) aufweist, mit dem genannten Eingang der Vertikal-Videosignalfilteraordnung gekoppelt ist, wobei jeder Multiplizierkreis (71, 72) einen Eingang aufweist, der mit dem genannten Eingang der Vertikal-Videosignalfilteranordnung gekoppelt ist, und einen Faktorsetzeingang zum Empfangen einer ersten (h(K)) oder einer zweiten (h(L)) Anzahl Gewichtungsfaktoren, wobei der genannte weitere Umschalter (73) einen ersten Eingang hat, der mit einem Ausgang des genannten ersten Multiplizierkreises (71) gekoppelt ist, einen zweiten Eingang, der mit einem Ausgang des genannten zweiten Multiplizierkreises (72) gekoppelt ist, und einen Ausgang, der mit dem genannten ersten Eingang des genannten Addierers (74) gekoppelt ist. (Fig. 10)

7. Vertikal-Videosignalfilteraordnung nach Anspruch 1, dadurch gekennzeichnet, daß sie weiterhin einen Gerad-Ungeradzahlig-Teilbild-Übergangsdetektor aufweist zum Detektieren des Übergangs eines geradzahligen oder eines ungeradzahligen Teilbildes zu einem ungeradzahligen bzw. geradzahligen Teilbild, wobei beim Auftreten jedes Teilbildes die Anordnung in eine richtige, dem betreffenden Teilbild entsprechende Ausgangslage gebracht wird.

## Revendications

1. Dispositif de filtrage vertical pour signaux vidéo destiné à filtrer un signal vidéo d'entrée, et comprenant un premier et un deuxième circuit de filtrage récursif pour fournir un premier et un deuxième signal vidéo filtré qui sont des combinaisons à chaque fois d'une pluralité de signaux vidéo provenant de périodes de lignes successives dudit signal vidéo d'entrée, ledit dispositif de filtrage vertical des signaux vidéo fournissant à une ligne dudit deuxième signal vidéo filtré chaque fois un nombre constant de périodes de lignes après avoir fourni une ligne dudit premier signal vidéo filtré, ledit premier circuit de filtrage récursif comprenant un premier additionneur (62; 74) comportant une première entrée couplée à une entrée du dispositif de filtrage vertical de signaux vidéo, un premier commutateur (S2; 76), une première mémoire de lignes (56; 75) ayant une entrée couplée à une sortie dudit premier additionneur (62; 74) et une sortie couplée à une seconde entrée dudit premier additionneur (62; 74), ledit deuxième circuit de filtrage récursif comprenant un deuxième additionneur (62; 74) ayant une première entrée couplée à ladite entrée du dispositif de filtrage vertical de signaux vidéo, un second commutateur (S2; 76), une deuxième mémoire de lignes (58; 75') ayant une entrée couplée à une sortie dudit deuxième additionneur (62; 74) et une sortie couplée à une deuxième entrée dudit deuxième additionneur (62; 74), caractérisé en ce que lesdits premier et deuxième additionneurs sont constitués d'un additionneur (62; 74) tandis que lesdites première (56; 75) et deuxième (58; 75') mémoires de lignes sont deux mémoires de lignes différentes (Fig. 8; 10).

2. Dispositif de filtrage vertical de signaux vidéo selon la revendication 1, caractérisé en ce qu'une première entrée dudit commutateur (S2) est couplée à ladite entrée dudit dispositif de filtrage vertical de signaux vidéo, une deuxième entrée dudit commutateur (S2) est couplée à ladite sortie dudit additionneur (62) et une sortie dudit commutateur (62) est couplée auxdites entrées desdites mémoires de lignes (56; 58) (Fig. 8).

3. Dispositif de filtrage vertical de signaux vidéo selon la revendication 2, caractérisé en ce qu'une première entrée d'un autre commutateur (60) est couplée à ladite sortie de ladite première mémoire de lignes (56), une deuxième entrée dudit autre commutateur (60) est couplée à ladite sortie de ladite deuxième mémoire de lignes (58), et une sortie dudit autre commutateur (60) est couplée à ladite seconde entrée dudit additionneur (62).

4. Dispositif de filtrage vertical de signaux vidéo selon la revendication 1, caractérisé en ce que lesdits premier et deuxième commutateurs sont constitués d'un seul commutateur (76), une première entrée (B) dudit commutateur (76) est couplée à ladite sortie de ladite première mémoire de lignes (56), une deuxième entrée (B') dudit commutateur (76) est couplée à ladite sortie de ladite deuxième mémoire de lignes (58) et une sortie dudit commutateur (76) est couplée à ladite deuxième entrée dudit additionneur (74) (Fig. 10).

5. Dispositif de filtrage vertical de signaux vidéo selon la revendication 1, caractérisé en ce que ladite première entrée dudit additionneur (62) est couplée à ladite entrée du dispositif de filtrage vertical de signaux vidéo via un circuit multiplicateur (50) ayant une entrée de réglage de facteurs, lesdites combinaisons étant des moyennes pondérées, ladite entrée de réglage de facteurs étant couplée à une sortie d'un autre commutateur (S1) ayant une première entrée pour recevoir une première pluralité de facteurs de pondération (h(K)) et une deuxième entrée pour recevoir une deuxième pluralité de facteurs de pondération (h(L)) (Fig. 8).

6. Dispositif de filtrage vertical de signaux vidéo selon la revendication 1, caractérisé en ce que lesdites combinaisons sont des moyennes pondérées et ladite première entrée dudit additionneur (62) est couplée à ladite entrée du dispositif de filtrage vertical de signaux vidéo via un dispositif multiplicateur (71, 72, 73) comprenant un premier (71) et un deuxième (72) circuit multiplicateur et un autre commutateur (73), chaque circuit multiplicateur (71, 72) ayant une entrée couplée à ladite entrée du dispositif de filtrage vertical de signaux vidéo et une entrée de réglage de facteurs pour recevoir une première (h(K)) ou une deuxième (h(L)) pluralité de facteurs de pondération, ledit autre commutateur (73) comportant une première entrée couplée à une sortie dudit premier circuit multiplicateur (71), une deuxième entrée couplée à une sortie dudit deuxième circuit multiplicateur (72) et une sortie couplée à ladite première entrée dudit additionneur (74) (Fig. 10).

7. Dispositif de filtrage vertical de signaux vidéo selon la revendication 1, caractérisé en ce qu'il comprend, en outre, un détecteur de transition de trame paireimpaire pour détecter la transition d'une trame paire ou impaire en une trame impaire ou paire, respectivement, de telle sorte que, au début de chaque trame, le dispositif soit amené à l'état initial correct correspondant à la trame en question.
